(19) Europäisches Patentamt

European Patent Office

Office européen des brevets

(11) **EP 0 908 608 B1**

(12) **FASCICULE DE BREVET EUROPEEN**

(45) Date de publication et mention
de la délivrance du brevet:
**21.05.2003 Bulletin 2003/21**

(51) Int Cl.⁷: **F01N 11/00**

(21) Numéro de dépôt: **98402425.7**

(22) Date de dépôt: **02.10.1998**

(54) **Procédé de surveillance du fonctionnement et du vieillissement d'un pot catalytique pour un moteur fonctionnant en mélange pauvre et système de mise en oeuvre**

Verfahren zur Funktions- und Alterungsüberwachung eines Katalysators für eine Brennkraftmaschine mit Verbrennung eines armen Gemisches und System zu seiner Durchführung

Process for monitoring the operation and ageing of a catalytic converter for a lean-burn engine and system for carrying out the process

(84) Etats contractants désignés:
**DE ES GB IT**

(30) Priorité: **10.10.1997 FR 9712701**

(43) Date de publication de la demande:
**14.04.1999 Bulletin 1999/15**

(73) Titulaire: **Renault s.a.s.**
**92100 Boulogne Billancourt (FR)**

(72) Inventeurs:
• **Aimard, Frédéric**
**92500 Rueil (FR)**
• **Lavillonniere, Thomas**
**92200 Bagneux (FR)**

(74) Mandataire: **Srour, Elie et al**
**Renault,**
**Département 00267**
**TCR AVA 0-56,**
**1, avenue du Golf**
**78288 Guyancourt Cedex (FR)**

(56) Documents cités:
EP-A- 0 756 072          DE-A- 19 537 788
DE-A- 19 645 202          DE-A- 19 708 225
US-A- 5 179 833

**Description**

L'invention se rapporte aux moteurs à combustion interne de véhicules automobiles fonctionnant en mélange pauvre et équipés d'un pot catalytique pour le traitement des gaz d'échappement.

Un pot catalytique a pour but de traiter les gaz d'échappement d'un moteur à combustion interne pour éliminer certains polluants tels que les hydrocarbures (HC), le monoxyde de carbone (CO) et les oxydes d'azote ($NO_x$). A cet effet, il comprend un monolithe qui est une structure poreuse présentant une grande superficie de contact avec les gaz d'échappement traversant le pot et qui est revêtue de diverses substances chimiques présentant des propriétés catalytiques. Ces substances chimiques ont pour but de permettre et de favoriser la combinaison des molécules oxydantes ($NO_x$ et $O_2$) et des molécules réductrices (HC, CO, $H_2$) dans les gaz d'échappement afin de produire de l'eau et du dioxyde de carbone.

Dans le cas d'un mélange air/carburant riche en carburant, il y a excès de molécules réductrices qu'il faut éliminer par un apport d'oxygène ($O_2$) tandis que dans le cas d'un mélange pauvre en carburant, il y a excès de molécules oxydantes ($O_2$) qu'il faudrait stocker pour l'oxydation des molécules réductrices. Un tel stockage est réalisé par oxydation de substances chimiques telles que le cérium présentes dans le monolithe.

On comprend alors que l'efficacité du pot catalytique dépend de l'état de la surface catalytique, état qui peut s'apprécier de différentes manières.

De nombreux procédés ont été proposés pour apprécier cet état de la surface catalytique en utilisant différents paramètres de mesure tels que :

- la capacité d'absorption en oxygène à l'aide d'une ou deux sondes à oxygène,
- l'exothermie des réactions catalytiques à l'aide d'un ou deux capteurs de température,
- la composition gazeuse des gaz d'échappement à l'aide d'un capteur calorimétrique, et
- la teneur en hydrocarbures des gaz d'échappement en amont et en aval du pot catalytique à l'aide d'un ou deux capteurs de mesure d'hydrocarbures.

Ces différents procédés connus présentent les inconvénients suivants pour leur utilisation en mélange pauvre :

- Le procédé de mesure d'absorption en oxygène n'est applicable que pour un moteur fonctionnant en mélange stoechiométrique car en mélange pauvre il y a toujours excès d'oxygène de sorte que le pot catalytique est saturé en oxygène. Pour qu'un tel procédé puisse fonctionner en mélange pauvre, il faudrait faire fonctionner le moteur en mélange stoechiométrique pendant quelques instants d'où une augmentation de la consommation.
- Le procédé par mesure d'exothermie est applicable à un mélange pauvre mais le critère n'est pas très sensible car le niveau de monoxyde de carbone (CO) et d'hydrogène ($H_2$) est faible du fait du mélange pauvre.
- Le procédé de mesure de composition gazeuse est applicable au mélange pauvre mais, ici aussi, le critère n'est pas très sensible car une variation de quelques ppm de la teneur en hydrocarbures ou autres réducteurs après le pot catalytique ne se traduit pas par une forte variation calorimétrique.
- Le procédé par mesure de la teneur en hydrocarbures est applicable au mélange pauvre mais les différentes applications connues de ce procédé ne permettent pas de séparer la dégradation de la combustion dans le moteur de celle due à la postcombustion dans le pot catalytique. En outre, les solutions comportant deux capteurs de mesure d'hydrocarbures ou un seul capteur de mesure d'hydrocarbures avec deux électrovannes sont coûteuses.

Le document EP756072 enseigne un procédé de déterminer un degré anormal de détérioration d'un catalyseur pour un moteur fonctionnement en mélange proche du mélange stoechiométrique. Selon ce document, lors des phases d'amorçage du catalyseur, une routine de détermination du degré de détérioration du catalyseur est déclenchée en mesurant la teneur d'hydrocarbure à la sortie du pot catalytique et en estimant à partir d'une cartographie et de cette valeur la teneur d'hydrocarbure à l'entrée du pot catalytique. Ce procédé ne prend pas en compte le phénomène lié au fonctionnement en mélange pauvre.

Le but de la présente invention est donc un procédé de surveillance du fonctionnement d'un pot catalytique pour un moteur fonctionnant en mélange pauvre qui :

- est d'un faible coût,
- est peu sensible au point de fonctionnement du moteur,
- réalise une bonne discrimination entre une dégradation de la combustion moteur et celle du pot catalytique, et
- est peu sensible à la dérive du capteur de mesure.

L'invention concerne donc un procédé de surveillance du fonctionnement et du vieillissement d'un pot catalytique pour un moteur à combustion interne fonctionnant en mélange pauvre caractérisé en ce qu'il comprend les étapes suivantes consistant à :

(a) mesurer la teneur $[HC]_{OUT}$ en hydrocarbures à la sortie du pot catalytique,

(b) estimer la valeur $[HC]_{INES}$ de la teneur en hydrocarbures à l'entrée du pot catalytique en fonction d'un modèle mathématique du moteur qui tient compte des caractéristiques de fonctionnement du moteur à chaque instant, et

(c) estimer un facteur caractéristique estimé $N_{ES}$ de l'état de surface catalytique du pot en fonction de la valeur estimée $[HC]_{INES}$ et de la valeur mesurée $[HC]_{OUT}$.

Pour obtenir un signal d'alarme, le procédé est complété par les étapes suivantes :

(d) comparer le facteur caractéristique estimé $N_{ES}$ à une valeur de seuil S,

(e) générer un signal d'alarme AL lorsque le facteur caractéristique estimé $N_{ES}$ atteint ladite valeur de seuil S.

Cette valeur estimée $[HC]_{INES}$ de la teneur en hydrocarbures à l'entrée du pot catalytique tient compte de l'instabilité de combustion du moteur par un coefficient multiplicateur qui dépend de la vitesse de rotation du moteur.

L'estimation du facteur caractéristique $N_{ES}$ de l'état de surface catalytique du pot peut être réalisée directement par une division entre une valeur proportionnelle à $[HC]_{INES}$ et la valeur mesurée $[HC]_{OUT}$.

L'estimation du facteur caractéristique $N_{ES}$ de l'état de surface catalytique du pot peut être aussi réalisée par une intégration d'une différence entre la valeur estimée $[HC]_{OUTES}$ et la valeur mesurée $[HC]_{OUT}$.

L'estimation du facteur caractéristique $N_{ES}$ en fonction de la valeur mesurée $[HC]_{OUT}$ et de la valeur estimée $[HC]_{INES}$ et effectuée de différentes manières, soit par itération en estimant tout d'abord $[HC]_{OUTES}$ en fonction de $[HC]_{INES}$ et du facteur caractéristique $N_{ES}$ à l'itération précédente, puis en intégrant la différence $([HC]_{OUTES} - [HC]_{OUT})$ conduisant à une erreur de modélisation venant ajuster l'estimation du facteur caractéristique $N_{ES}$, soit directement par une division de $[HC]_{INES}$ par $[HC]_{OUT}$ selon différentes variantes.

Enfin l'invention concerne un système pour mettre en oeuvre le procédé décrit ci-dessus caractérisé en ce qu'il comprend :

- un capteur de vitesse de rotation du moteur $N_{mot}$,
- un capteur de la pression $P_{coll}$ du collecteur d'admission en air du moteur ou un débitmètre,
- un capteur de la teneur en hydrocarbures $[HC]_{OUT}$ à la sortie du pot catalytique,
- un calculateur pour estimer le facteur caractéristique $N_{ES}$ de l'état de surface catalytique du pot catalytique en fonction des valeurs fournies par les capteurs, et
- un comparateur pour comparer le terme estimé $N_{ES}$ à une valeur de seuil S et fournir un signal d'alarme AL lorsque le terme estimé $N_{ES}$ atteint la valeur de seuil S.

D'autres caractéristiques et avantages de la présente invention apparaîtront à la lecture de la description suivante d'exemples particuliers de réalisation, ladite description étant faite en relation avec les dessins joints dans lesquels :

- la figure 1 est un schéma fonctionnel d'un système mettant en oeuvre l'invention,
- la figure 2 est un diagramme montrant la courbe de variation de la tension fournie $V_{HC}$ par un capteur de mesure d'hydrocarbures en fonction de la teneur en hydrocarbures,
- la figure 3 est un schéma fonctionnel d'un dispositif mettant en oeuvre l'invention,
- la figure 4 est un schéma fonctionnel d'un premier estimateur de surface catalytique $N_S$ par observateur adaptatif,
- la figure 5 est un schéma fonctionnel d'un deuxième estimateur de surface catalytique $N_S$ par calcul statique direct,
- la figure 6 est un schéma fonctionnel d'un troisième estimateur de surface catalytique $N_S$ pour un premier calcul statique simplifié,
- la figure 7 est un schéma fonctionnel d'un quatrième estimateur de surface catalytique $N_S$ par un deuxième calcul statique simplifié,
- la figure 8 est un schéma fonctionnel d'un circuit logique de surveillance, et
- la figure 9 est un diagramme montrant les opérations d'étalonnage du capteur de mesure d'hydrocarbures selon la présente invention.

L'invention s'applique à un moteur à combustion interne 10 qui est alimenté en air par un collecteur d'admission 12 et en carburant par un dispositif d'injection 14. Le conduit d'admission 12 est équipé d'un papillon 16. Les gaz d'échappement du moteur sont évacués par un conduit d'échappement 18 équipé d'un pot catalytique 20.

Pour mettre en oeuvre le procédé et le système selon l'invention, il est nécessaire de mesurer :

- la teneur en hydrocarbures [HC] par un capteur 22 disposé en aval du pot catalytique 20,
- la vitesse de rotation du moteur $N_{mot}$ par un capteur 24, et
- la pression du collecteur d'admission $P_{coll}$ par un capteur 26 ; ce capteur de pression peut être remplacé par un dispositif de mesure de débit d'air ou débitmètre.

Ces mesures sont utilisées pour effectuer des calculs dans un dispositif 28 qui fournit sur sa borne de sortie un signal d'alarme AL lorsque la dégradation du pot catalytique a atteint un certain seuil.

Par ailleurs, ce dispositif 28 fournit un signal de commande P du papillon 16 lors de l'étalonnage périodique du capteur 22 lorsque le papillon 16 est du type motorisé. Si le papillon 16 n'est pas motorisé, une vanne motorisée (non représentée) sera disposée sur un conduit en dérivation sur le papillon 16.

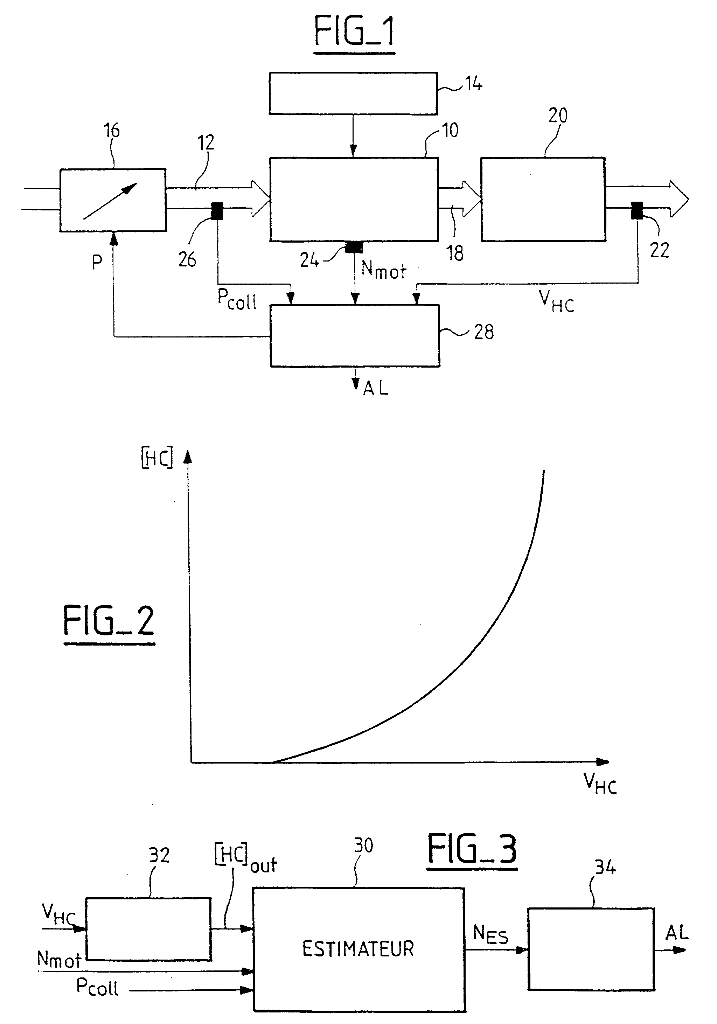

Le capteur 22 fournit une tension $V_{HC}$ dont la variation est une fonction de la teneur en hydrocarbures [HC] des gaz d'échappement du pot catalytique 20 selon la courbe de la figure 2. Cette courbe présente un décalage du zéro dont il est tenu compte dans l'invention par l'étalonnage périodique du capteur 22.

Comme le montre le schéma de la figure 3, le dispositif 28 comprend essentiellement un estimateur 30 de l'état de la surface catalytique $N_{ES}$ qui estime la valeur $N_{ES}$ à partir des mesures $V_{HC}$, $N_{mot}$ et $P_{coll}$ sachant que la mesure $V_{HC}$ est transformée en concentration $[HC]_{OUT}$ dans un dispositif 32 qui tient compte du décalage de zéro. La valeur estimée $N_{ES}$ fournie par l'estimateur 30 est appliquée à un circuit logique de surveillance 34 qui détermine le signal d'alarme AL.

L'estimateur de la valeur $N_{ES}$ est un calculateur qui effectue des opérations mathématiques dont le nombre et la complexité dépendent de la précision que l'on souhaite obtenir et des approximations qui peuvent être faites de certains paramètres.

La réalisation de l'estimateur 30 est basée sur une modélisation mathématique du pot catalytique 20 selon l'équation différentielle en temps suivante :

$$[\dot{HC}]_{OUT} = -VVH.([HC]_{OUT}-[HC]_{IN})-N_S.K.[HC]_{OUT}.[O_2]_{IN} \qquad (1)$$

équation dans laquelle :

- $N_S$ est un facteur caractéristique de l'état de surface catalytique,
- VVH est la vitesse linéaire des gaz d'échappement par seconde qui dépend du débit massique et de la température des gaz,
- $[HC]_{IN}$ est la teneur ou concentration en hydrocarbures qui dépend des conditions de fonctionnement du moteur en termes de régime $N_{mot}$, pression collecteur $P_{coll}$ et richesse du mélange,
- $[O_2]_{IN}$ est la teneur ou concentration des substances oxydantes à l'entrée du pot catalytique en excès lors du fonctionnement en mélange pauvre qui dépend de la richesse du mélange imposé par le système de contrôle du moteur,
- K caractérise la cinétique chimique de l'oxydation des hydrocarbures dont la dépendance vis-à-vis de la température du catalyseur est négligeable dès que le pot catalytique est à la bonne température.

Cette équation différentielle donne un lien direct entre l'état $N_S$ du catalyseur et la quantité d'hydrocarbures $[HC]_{OUT}$ mesurée par le capteur 22 de la teneur en hydrocarbures, en fonction des caractéristiques des gaz d'échappement.

La valeur estimée $[HC]_{INES}$ de la teneur en hydrocarbures à l'entrée du pot catalytique peut être décomposée en une teneur $[HC]_{IN}$ correspondant à un fonctionnement normal du moteur multipliée par un coefficient correctif δ qui dépend de l'estimation d'instabilités de la combustion moteur, fonction du signal de régime instantané ($Insta(N_{mot})$), ce qui se traduit par la formule :

$$[HC]_{INES} = [HC]_{IN}(N_{mot}, P_{coll}).\delta(Insta(N_{mot})) \qquad (2)$$

De même, la teneur en oxygène à l'entrée du pot catalytique peut être estimée en fonction de $N_{mot}$ et $P_{coll}$ selon la formule :

$$[O_2]_{INES} = [O_2]_{IN}(N_{mot}, P_{coll}) \qquad (3)$$

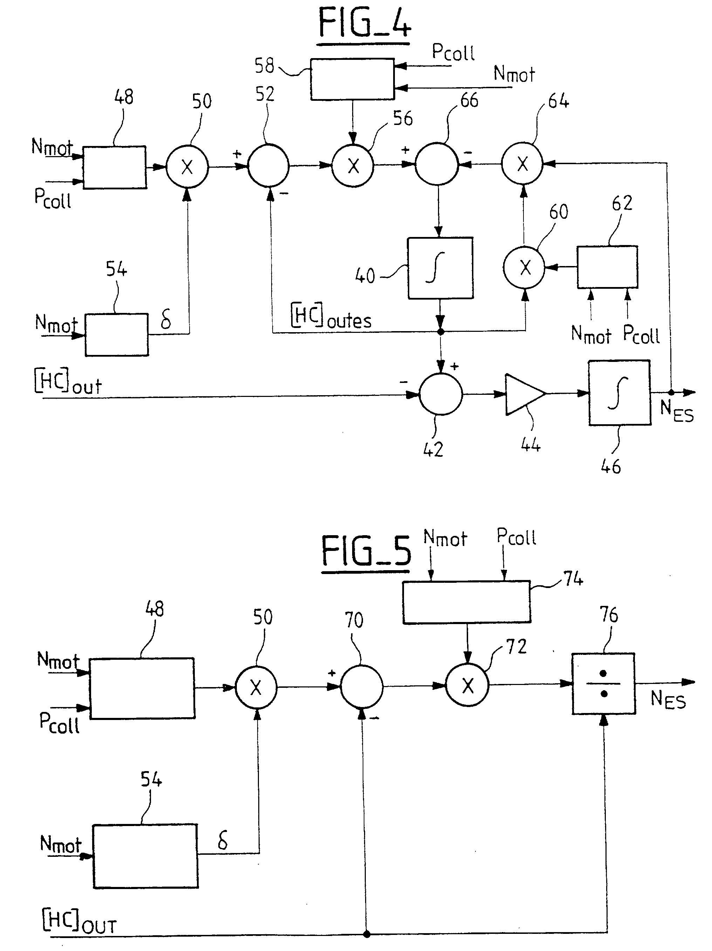

L'équation différentielle (1) et les formules (2) et (3) conduisent à plusieurs modes de réalisation de l'estimateur 30 qui seront décrits en relation avec les figures 4 à 7.

La figure 4 est un schéma décrivant un mode de réalisation de l'estimateur par un observateur dynamique prenant en compte la dynamique de fonctionnement du pot catalytique. L'adaptation du paramètre caractéristique $N_S$ s'effectue en fonction de la teneur en hydrocarbures mesurée $[HC]_{OUT}$ et celle estimée $[HC]_{OUTES}$ selon l'équation différentielle en temps suivante :

$$\dot{N}_S = G.([HC]_{OUTES}-[HC]_{OUT}) \tag{4}$$

L'estimateur de la figure 4 calcule la valeur estimée de la concentration à la sortie du pot catalytique $[HC]_{OUTES}$ en effectuant l'intégration du deuxième membre de l'équation différentielle (1) dans un premier intégrateur 40. La valeur mesurée $[HC]_{OUT}$ est soustraite de la valeur estimée $[HC]_{OUTES}$ dans un soustracteur 42 et la différence est intégrée dans un deuxième intégrateur 46, équation (4), à la borne de sortie duquel apparaît la valeur estimée $N_{ES}$ du paramètre $N_S$ caractérisant l'état de la surface catalytique.

De manière plus précise, les valeurs de $N_{mot}$ et $P_{coll}$ déterminent grâce à une cartographie 48, la valeur de $[HC]_{IN}$ en fonctionnement normal. Cette valeur est corrigée par le facteur $\delta$ dans un multiplicateur 50, le facteur $\delta$ étant fourni, par exemple, par une cartographie 54 qui dépend d'une analyse fréquentielle de la valeur $N_{mot}$.

Il en résulte que la borne de sortie du multiplicateur 50 fournit la valeur estimée $[HC]_{INES}$ des hydrocarbures à l'entrée du pot catalytique. A cette valeur estimée $[HC]_{INES}$ est soustraite, dans un soustracteur 52, la valeur estimée $[HC]_{OUTES}$ pour réaliser l'opération définie par le premier terme du deuxième membre de l'équation (1).

Cette valeur estimée $[HC]_{OUTES}$ est obtenue en multipliant dans un multiplicateur 56 la différence $([HC]_{INES}-[HC]_{OUTES})$ fournie par le soustracteur 52 par la vitesse VVH qui dépend de la pression collecteur $P_{coll}$ et de la vitesse de rotation du moteur $N_{mot}$ selon une cartographie 58.

Le deuxième terme du deuxième membre de l'équation (1) est obtenu en multipliant dans un multiplicateur 60 la valeur estimée $[HC]_{OUTES}$ fournie par l'intégrateur 40 par la valeur estimée $K.[O_2]_{IN}$ qui est fournie, par exemple par une cartographie 62 en fonction des valeurs $N_{mot}$ et $P_{coll}$. Le résultat de cette multiplication est multiplié, dans un multiplicateur 64, par la valeur estimée $N_{ES}$ fournie par l'intégrateur 46 et la valeur qui résulte de cette multiplication est soustraite dans un soustracteur 66 au premier terme du deuxième membre de l'équation (1).

La valeur différentielle à la sortie du soustracteur 42 est amplifiée dans un amplificateur 44 dont le gain G règle la vitesse de convergence de l'estimateur et effectue un filtrage.

Les grandeurs caractéristiques $[HC]_{IN}$, $\delta$, VVH, $K.[O_2]_{IN}$ sont calculées par des cartographies qui sont en fait des tables de correspondance. Elles peuvent être aussi calculées par des polynômes ou être prises comme des constantes selon la précision souhaitée et des conditions habituelles de fonctionnement.

L'équation différentielle (1) donne la variation ou dérivée de $[HC]_{OUT}$ par rapport au temps ; si on peut considérer que cette dérivée est nulle car on peut considérer que les réactions catalytiques sont très rapides, l'équation (1) donne alors directement la valeur de $N_S$ par la formule :

$$N_S = VVH.([HC]_{IN}-[HC]_{OUT})/K[HC]_{OUT}.[O_2]_{IN} \tag{5}$$

soit :

$$NES = ([HC]_{INES}-[HC]_{OUT}).\frac{VVH}{K[O_2]_{INES}} \times \frac{1}{[HC]_{OUT}} \tag{6}$$

formule (6) qui conduit directement au schéma de la figure 5 en tenant compte du facteur d'instabilité $\delta$.

La valeur mesurée $[HC]_{OUT}$ est soustraite dans le soustracteur 70 à la valeur estimée $[HC]_{INES}$ qui tient compte du facteur $\delta$ d'instabilité de combustion. Le résultat de la soustraction est multiplié dans un multiplicateur 72 par le rapport $VVH/K.[O_2]_{INES}$ qui est par exemple obtenu par une cartographie 74 en fonction de $_{Nmot}$ et $P_{coll}$.

La valeur de sortie du multiplicateur 72 est divisée par la valeur $[HC]_{OUT}$ dans un diviseur 76 qui fournit la valeur estimée $N_{ES}$.

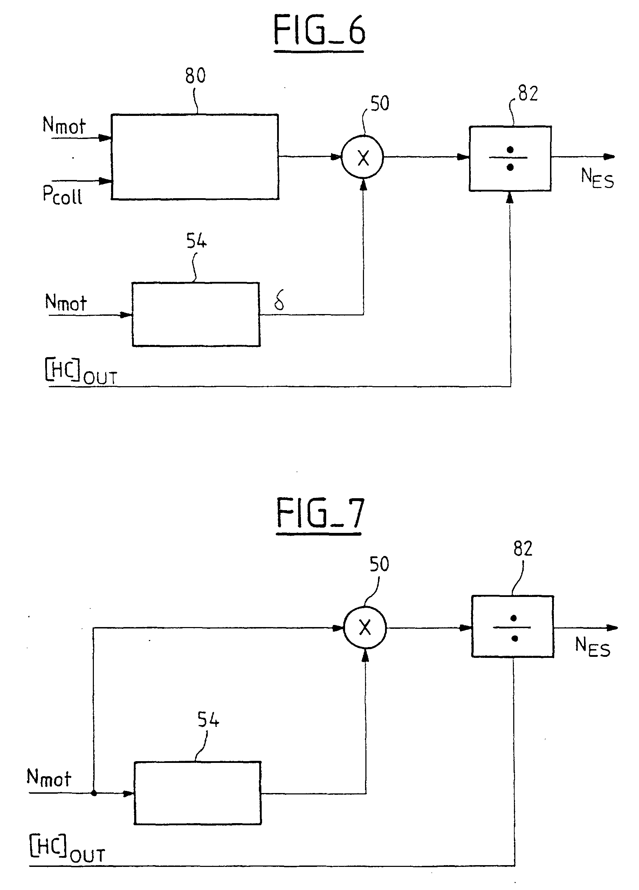

Le schéma de la figure 5 peut être simplifié pour aboutir au schéma de la figure 6 si $[HC]_{OUT}$ est négligeable vis-à-vis de $[HC]_{IN}$. Dans cette hypothèse, la formule (6) devient :

$$N_{ES} = VVH.[HC]_{INES}/K[O_2]_{INES} \times \frac{1}{[HC]_{OUT}} \qquad (7)$$

Le premier terme du deuxième membre est obtenu par une multiplication dans le multiplicateur 50 entre le premier terme $\delta$ dit d'instabilité fourni par la cartographie 54 et un deuxième terme fourni par une cartographie 80 de $VVH.[HC]_{IN}/K.[O_2]_{IN}$ en fonction de $N_{mot}$ et $P_{coll}$. Le résultat de la multiplication est divisé par la valeur mesurée $[HC]_{OUT}$ dans un diviseur 82.

On peut encore simplifier le schéma de la figure 6 en faisant les hypothèses suivantes. La teneur en oxygène $[O_2]_{IN}$ peut être considérée comme constante dans un moteur à mélange pauvre de sorte que la valeur $K[O_2]_{INES}$ de la formule (7) est constante. Par ailleurs, la valeur VVH est proportionnelle au produit $N_{mot}.P_{coll}$ tandis que le terme en hydrocarbures est inversement proportionnel à $P_{coll}$ de sorte que le terme $VVH.[HC]_{INES}$ de la formule (7) est proportionnel à $N_{mot}$.

On aboutit alors au schéma de la figure 7 dans lequel le multiplicateur 50 effectue la multiplication de $N_{mot}$ par le facteur d'instabilité $\delta$ lui-même dépendant de $N_{mot}$. Le résultat de la multiplication est divisé par $[HC]_{OUT}$ dans le diviseur 82 qui fournit la valeur estimée $N_{ES}$.

Le circuit logique 34 (figure 3) qui fournit le signal d'alarme AL peut comprendre un comparateur 90 dont une borne d'entrée reçoit le signal $N_{ES}$ et dont l'autre borne d'entrée reçoit un signal de seuil S dont la valeur correspond à la valeur de $N_S$ lorsque le pot catalytique est considéré comme dégradé. Ainsi, si la valeur de $N_S$ pour un pot catalytique neuf est égale à l'unité, alors le seuil S pourra être une valeur fractionnaire, par exemple 0,8. Dans ce cas, dès que $N_{ES}$ est inférieure à 0,8, le comparateur 90 fournira un signal d'alarme.

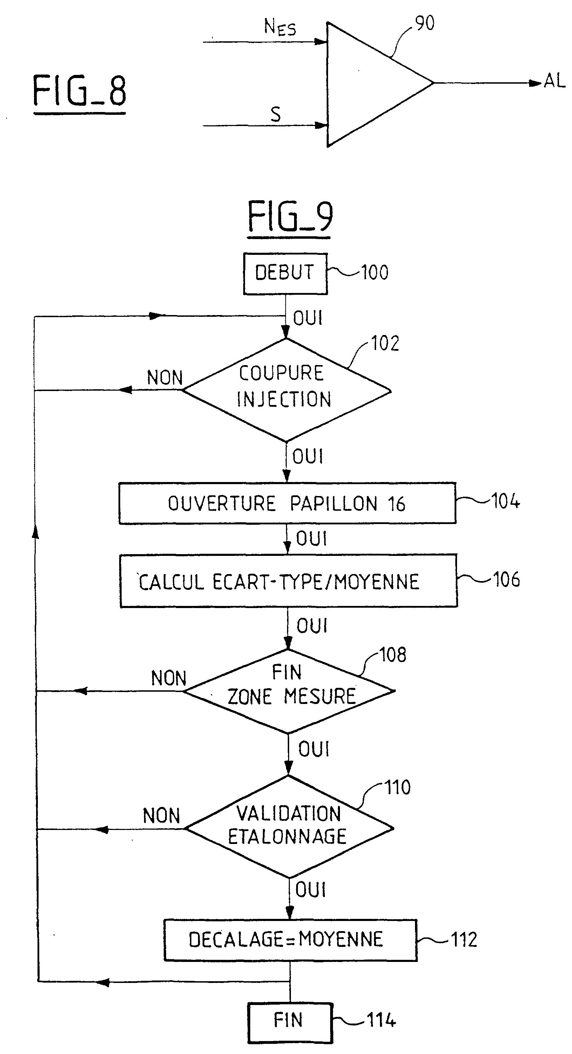

Le diagramme de la figure 9 indique les opérations à effectuer pour effectuer, de temps à autre, un étalonnage du capteur de mesure de la teneur en hydrocarbures, c'est-à-dire déterminer le décalage du zéro en l'absence d'hydrocarbures. Pour être dans cet état, le moteur doit être en décélération et en injection coupée pendant un certain temps. En outre, il faut prévoir un excès d'oxygène pour éliminer toute trace d'hydrocarbures, notamment celle provenant de l'huile moteur.

Après le début 100 de l'opération d'étalonnage, l'étape 102 consiste à vérifier s'il y a coupure d'injection. On ne passe à l'étape suivante 104 d'ouverture de l'actionneur d'air 16 que s'il y a coupure de l'injection.

L'étape suivante 106 consiste à calculer l'écart-type et la moyenne des valeurs $V_{HC}$ mesurées. Si l'écart-type est suffisamment faible (étape 110), c'est-à-dire inférieure à un certain seuil, la valeur moyenne calculée est validée. Cette validation ne peut avoir lieu si la fenêtre temporelle de mesure (108) n'est pas terminée (étape 108). La valeur du décalage de zéro est égale à la valeur moyenne calculée et sert à modifier la table de correction 32 (figure 3).

Pour simplifier la description, le système a été décrit sous la forme analogique mais il est clair qu'il peut être réalisé sous la forme numérique en effectuant les différentes opérations arithmétiques par un calculateur numérique ou microprocesseur qui est convenablement programmé.

La description qui vient d'être faite de l'invention en relation avec les figures 1 à 9 permet de définir un procédé qui comprend les étapes suivantes consistant à :

(a) mesurer la teneur $[HC]_{OUT}$ en hydrocarbures à la sortie du pot catalytique 20,
(b) estimer la valeur $[HC]_{INES}$ de la teneur en hydrocarbures à l'entrée du pot catalytique 20 en fonction d'un modèle mathématique du moteur qui tient compte des caractéristiques de fonctionnement du moteur à chaque instant, et
(c) estimer un facteur caractéristique estimé $N_{ES}$ de l'état de surface catalytique du pot en fonction de la valeur estimée $[HC]_{INES}$ et de la valeur mesurée $[HC]_{OUT}$.

Le facteur $N_{ES}$ est fonction de $[HC]_{INES}$ et $[HC]_{OUT}$, soit par un calcul itératif réalisant une estimation de $[HC]_{OUT}$, soit par un calcul direct.

Ces étapes (a), (b) et (c) sont complétées par les étapes suivantes consistant à :

(d) comparer le facteur caractéristique estimé $N_{ES}$ à une valeur de seuil S,
(e) générer un signal d'alarme AL lorsque le facteur caractéristique estimé $N_{ES}$ atteint ladite valeur de seuil S.

La valeur estimée $[HC]_{INES}$ dépend du point de fonctionnement du moteur défini par la vitesse $N_{mot}$ et la pression collecteur $P_{coll}$ ainsi que de l'instabilité de combustion du moteur selon un coefficient $\delta$ qui est une fonction de la vitesse $N_{mot}$.

L'estimation du facteur caractéristique $N_{ES}$ en fonction de la valeur mesurée $[HC]_{OUT}$ et de la valeur estimée $[HC]_{INES}$ est effectuée de différentes manières, soit en estimant tout d'abord $[HC]_{OUTES}$ à la sortie du pot catalytique en fonction de $[HC]_{INES}$ et du facteur caractéristique $N_{ES}$ à l'itération précédente, puis en intégrant la différence $([HC]_{OUTES} - [HC]_{OUT})$ conduisant à une erreur de modélisation venant ajuster l'estimation du facteur caractéristique (schéma de la figure 4), soit directement par une division de $[HC]_{INES}$ par $[HC]_{OUT}$ selon les différentes variantes des schémas des figures 5 à 7.

Dans la variante de la figure 7, la valeur estimée $[HC]_{INES}$ dépend uniquement de la vitesse $N_{mot}$ et du facteur d'instabilité de combustion $\delta$ qui dépend aussi de la vitesse $N_{mot}$.

Dans la variante de la figure 6, la valeur estimée $[HC]_{INES}$ dépend du rapport VVH.$[HC]_{INES}$/K.$[O_2]_{INES}$, fonction de $N_{mot}$ et $P_{coll}$, rapport qui est corrigé par le facteur d'instabilité de combustion $\delta$ dans le multiplicateur 50.

Dans la variante de la figure 5, la valeur estimée $[HC]_{INES}$ est corrigée, d'une part, par le facteur d'instabilité de combustion $\delta$ dans le multiplicateur 50 et, d'autre part, de la valeur mesurée $[HC]_{OUT}$ dans le comparateur 70. La combustion due au pot catalytique intervient par le terme VVH/K.$[O_2]_{INES}$ dans le multiplicateur 72.

Dans la variante de la figure 4, le facteur $N_{ES}$ est estimé en effectuant une intégration de la différence définie par l'équation différentielle (4) ; par ailleurs, la valeur estimée de $[HC]_{OUTES}$ est également calculée en effectuant l'intégration de la différence définie par l'équation différentielle (1).

## Revendications

1.  Procédé de surveillance du fonctionnement et du vieillissement d'un pot catalytique (20) pour un moteur à combustion interne (10) fonctionnant en mélange pauvre comprenant une étape de mesure de la teneur $[Hc]_{OUT}$ en hydrocarbures à la sortie du pot catalytique (20) et une étape dans l'estimation de la teneur $[Hc]_{INES}$ en hydrocarbures à l'entrée du pot catalytique, **caractérisé en ce que** :

    -   la valeur de la teneur en hydrocarbures à l'entrée du pot catalytique $[Hc]_{INES}$ est estimé en fonction d'un modèle mathématique du moteur qui tient compte des caractéristiques de fonctionnement du moteur à chaque instant, et **en ce qu'**on estime un facteur caractéristique $N_{ES}$ de l'état de surface catalytique du pot catalytique en fonction de la valeur estimée $[Hc]_{INES}$ et de la valeur mesurée $[Hc]_{OUT}$ de la teneur en hydrocarbures à la sortie du pot catalytique

2.  Procédé selon la revendication 1, **caractérisé en ce qu'**il comprend, en outre, les étapes suivantes :

    -   comparer le facteur caractéristique estimé $N_{ES}$ à une valeur de seuil S,
    -   générer un signal d'alarme AL lorsque le facteur caractéristique estimé $N_{ES}$ atteint ladite valeur de seuil S.

3.  Procédé selon la revendication 1 ou 2, **caractérisé en ce que** l'estimation du facteur caractéristique $N_{ES}$ est effectuée par itération en estimant tout d'abord la teneur en hydrocarbures à la sortie du pot catalytique $[Hc]_{OUTES}$ en fonction de la teneur en hydrocarbures estimée à l'entrée du pot catalytique $[Hc]_{INES}$ et du facteur caractéristique $N_{ES}$ à l'itération précédente puis en intégrant la différence entre l'estimation de la teneur $[Hc]_{OUTES}$ en hydrocarbure à la sortie du pot catalytique et la mesure $[Hc]_{OUT}$ de cette même teneur conduisant à une erreur de modélisation.

4.  Procédé selon la revendication 3, **caractérisé en ce que** la valeur estimée $[HC]_{INES}$ de la teneur en hydrocarbures à l'entrée du pot catalytique tient compte de l'instabilité de combustion du moteur par un coefficient multiplicateur $\delta$ (50) qui dépend de la vitesse de rotation du moteur (10) selon une cartographie (54).

5.  Procédé selon l'une des revendications 1 ou 2, **caractérisé en ce que** l'étape d'estimation du facteur caractéristique $N_{ES}$ consiste à effectuer une division entre une valeur proportionnelle à l'estimation de la teneur en hydrocarbures à l'entrée du pot catalytique (20) $[HC]_{INES}$ et la valeur mesurée $[HC]_{OUT}$ de la teneur en hydrocarbure à la sortie du pot catalytique.

6.  Procédé selon la revendication 5, **caractérisé en ce que** la valeur proportionnelle à l'estimation de la teneur en hydrocarbures à l'entrée du pot catalytique $[HC]_{INES}$ dépend uniquement de la vitesse de rotation du moteur $N_{mot}$.

7.  Procédé selon la revendication 5, **caractérisé en ce que** la valeur proportionnelle à l'estimation de la teneur en hydrocarbures à l'entrée du pot catalytique $[HC]_{INES}$ dépend du rapport entre les valeurs estimées à l'entrée du pot catalytique des hydrocarbures $[HC]_{INES}$ et de l'oxygène $[O_2]_{INES}$ et de la vitesse linéaire VVH des gaz d'échappement du moteur qui résultent des points de fonctionnement du moteur définis par la vitesse de rotation du moteur $N_{mot}$ et la pression $P_{coll}$ du collecteur d'admission du moteur.

8.  Procédé selon la revendication 5, **caractérisé en ce que** la valeur proportionnelle à l'estimation de la teneur en hydrocarbures à l'entrée du pot catalytique $[HC]_{INES}$ est obtenue par une cartographie (80) du rapport VVH .

$[Hc]_{INES})/K.[O_2]_{INES}$ en fonction de la vitesse de rotation du moteur $N_{mot}$ et de la pression collecteur $P_{coll}$, K étant un facteur de proportionnalité,

- $[O_2]_{INES}$ étant la valeur estimée de la teneur en oxygène à l'entrée du pot catalytique.

9. Procédé selon la revendication 7, **caractérisé en ce que** la valeur estimée $[Hc]_{INES}$ de la teneur en hydrocarbures à la l'entrée du pot catalytique est corrigée de la valeur mesurée $[Hc]_{OUT}$ de la teneur en hydrocarbures à la sortie du pot catalytique de manière à obtenir un terme $[Hc]_{INES}$ - $[Hc]_{OUT}$ qui est multipliée (72) par le terme VVH/K. $[O_2]_{INES}$

- VVH étant la vitesse linéaire des gaz d'échappement
- $[O_2]_{INES}$ étant la valeur estimée de la teneur en oxygène à l'entrée du pot catalytique.
- K étant un facteur de proportionnalité.

10. Procédé selon la revendication 9, **caractérisé en ce que** le terme $[HC]_{INES}$ ainsi que le terme VVH/K.$[O_2]_{INES}$ sont estimés chacun par une cartographie (48, 74) en fonction de la vitesse de rotation du moteur $N_{mot}$ et de la pression collecteur $P_{coll}$.

11. Procédé selon l'une des revendications 3 à 4, **caractérisé en ce que** l'étape d'estimation du facteur caractéristique $N_{ES}$ consiste à effectuer une intégration (46) d'une différence (42) entre la valeur estimée $[HC]_{OUTES}$ de la teneur en hydrocarbures à la sortie du pot catalytique et la valeur mesurée $[Hc]_{OUT}$ de cette même teneur.

12. Procédé selon la revendication 11, **caractérisé en ce que** la valeur estimée $[HC]_{OUTES}$ des hydrocarbures à la sortie du pot catalytique est obtenue par une intégration (40) d'une différence entre un premier terme $([HC]_{OUTES}-[HC]_{INES}).$VVH représentatif de la combustion réalisée dans le pot catalytique et d'un deuxième terme $N_{ES}.K.[HC]_{OUTES}.[O_2]_{INES}$ représentatif de l'efficacité du pot catalytique, dans lesquelles :

$[Hc]_{INES}$     est une estimation de la teneur en hydrocarbures à l'entrée du pot catalytique.

VVH     est la vitesse linéaire des gaz d'échappement

NES     est la facteur caractéristique

K     est un facteur de proportionnalité

$[O_2]_{INES}$     est une estimation de la teneur en oxygène à l'entrée du pot catalytique.

13. Procédé selon la revendication 12, **caractérisé en ce que** dans le premier terme $([HC]_{OUTES}-[HC]_{INES}).$VVH la valeur estimée $[HC]_{INES}$ des hydrocarbures à l'entrée du pot catalytique ainsi que le coefficient multiplicateur VVH correspondant à la vitesse linéaire des gaz d'échappement sont obtenus respectivement par des cartographies (48, 58) en fonction de la vitesse de rotation du moteur $N_{mot}$ et de la pression du collecteur d'admission $P_{coll}$.

14. Procédé selon la revendication 12 ou 13, **caractérisé en ce que** dans le deuxième terme $N_{ES}.K.[HC]_{OUTES}.[O_2]_{INES}$, la valeur estimée $K.[O_2]_{INES}$ de l'oxygène à l'entrée du pot catalytique est obtenue par une cartographie (62) en fonction de la vitesse de rotation du moteur $N_{mot}$ et de la pression du collecteur d'admission $P_{coll}$.

15. Procédé selon l'une quelconque des revendications précédentes 1 à 14, **caractérisé en ce que** les différentes cartographies sont remplacées par des calculs de polynômes.

16. Procédé selon l'une quelconque des revendications précédentes, **caractérisé en ce que** l'étape de mesure de la teneur $[HC]_{OUT}$ en hydrocarbures à la sortie du pot catalytique (20) comprend les étapes suivantes consistant à :

$(a_1)$ mesurer la tension $V_{HC}$ fournie par un capteur (22) apte à détecter la présence d'hydrocarbures,
$(a_2)$ convertir la tension mesurée $V_{HC}$ en une teneur en hydrocarbures [HC] selon une courbe de conversion déterminée,
$(a_3)$ étalonner de temps à autre le capteur (22) en mesurant la tension $V_0$ qu'il fournit en l'absence d'alimentation en carburant et en excès d'air pendant un certain temps de manière à modifier en conséquence la courbe de conversion déterminée.

**17.** Procédé selon la revendication 16, **caractérisé en ce que** l'étape ($a_3$) comprend les étapes suivantes consistant à

($a_{31}$) détecter l'absence d'alimentation en carburant du moteur,
($a_{32}$) ouvrir l'entrée d'air du moteur,
($a_{33}$) mesurer répétitivement la tension $V_0$ du capteur (22),
($a_{34}$) calculer la moyenne et l'écart-type des valeurs de la tension $V_0$ mesurées,
($a_{35}$) retenir comme valeur de la tension $V_0$ la valeur moyenne correspondant à un écart-type déterminé, et
($a_{36}$) modifier en conséquence la courbe de conversion.

**18.** Système pour mettre en oeuvre le procédé selon l'une quelconque des revendications précédentes qui comprend :

- un capteur (24) de vitesse de rotation du moteur ($N_{mot}$),
- un capteur (20) de la pression $P_{coll}$ du collecteur d'admission en air du moteur, ou en dispositif de mesure de débit d'air.
- un capteur (22,32) de la teneur en hydrocarbures $[Hc]OUT$ à la sortie du pot catalytique (20),
- un calculateur (30) pour, estimer la teneur en hydrocarbures $[Hc]_{INES}$ à l'entrée du pot catalytique, et pour un facteur caractéristique $N_{ES}$ de l'état de surface catalytique du pot catalytique (20) en fonction des valeurs fournies par les trois capteurs (22, 24,26), **caractérisé en ce que**
- le calculateur (30) estime à partir d'un modèle mathématique la valeur de la teneur en $[HC]_{INES}$ à l'entrée du pot catalytique, et pour un facteur caractéristique $N_{ES}$ de l'état de surface du pot catalytique (20) en fonction des valeurs fournies par les capteurs (22, 24, 26) à chaque instant du fonctionnement du moteur et
- un comparateur (34) compare le terme estimé $N_{ES}$ à une valeur de seuil S et fournit un signal d'alarme AL lorsque le terme estimé $N_{ES}$ atteint la valeur seuil S.

**Patentansprüche**

**1.** Verfahren zur Überwachung der Funktionsweise und der Alterung eines mit einem Katalysator versehenen Auspufftopfes (20) für einen mit einem mageren Gemisch betriebenen Verbrennungsmotor (10), mit einem Schritt der Messung des Gehaltes $[HC]_{OUT}$ an Kohlenwasserstoffen am Ausgang des mit dem Katalysator versehenen Auspufftopfes (20) und mit einem Schritt der Abschätzung des Gehaltes $[HC]_{INES}$ an Kohlenwasserstoffen am Eingang des mit dem Katalysator versehenen Auspufftopfes, **dadurch gekennzeichnet, dass** der Wert des Gehaltes $[HC]_{INES}$ an Kohlenwasserstoffen am Eingang des mit dem Katalysator versehenen Auspufftopfes geschätzt wird als Funktion eines mathematischen Modells des Motors, das die Betriebsbedingungen des Motors zu jedem Zeitpunkt berücksichtigt und dass ein charakteristischer Faktor $N_{ES}$ für den Zustand der katalytischen Oberfläche im Auspufftopf geschätzt wird als Funktion des geschätzten Wertes $[HC]_{INES}$ und des gemessenen Wertes $[HC]_{OUT}$ des Gehaltes an Kohlenwasserstoffen am Ausgang des mit dem Katalysator versehenen Auspufftopfes.

**2.** Verfahren nach Anspruch 1, **dadurch gekennzeichnet, dass** es außerdem die folgenden Schritte aufweist: vergleichen des geschätzten charakteristischen Faktors $N_{ES}$ mit einem Schwellwert S,
erzeugen eines Alarmsignals AL, wenn der geschätzte charakteristische Faktor $N_{ES}$ den Schwellwert S erreicht.

**3.** Verfahren nach Anspruch 1 oder 2, **dadurch gekennzeichnet, dass** die Abschätzung des charakteristischen Faktors $N_{ES}$ durch ein Näherungsverfahren erfolgt, indem zuerst der Gehalt $[HC]_{OUTES}$ an Kohlenwasserstoffen am Ausgang des mit dem Katalysator versehenen Auspufftopfes geschätzt wird als Funktion des geschätzten Gehaltes $[HC]_{INES}$ an Kohlenwasserstoffen am Eingang des mit dem Katalysator versehenen Auspufftopfes und des charakteristischen Faktors $N_{ES}$ aus dem vorhergehenden Näherungsverfahren mit anschließender Integration der Differenz zwischen der Schätzung des Gehaltes $[HC]_{OUTES}$ an Kohlenwasserstoffen am Ausgang des mit dem Katalysator versehenen Auspufftopfes und der Messung $[HC]_{OUT}$ desselben Gehaltes, wodurch ein Fehler der Modellbildung erhalten wird.

**4.** Verfahren nach Anspruch 3, **dadurch gekennzeichnet, dass** der geschätzte Wert $[HC]_{INES}$ des Gehaltes an Kohlenwasserstoffen am Eingang des mit dem Katalysator versehenen Auspufftopfes die Instabilität der Verbrennung im Motor berücksichtigt mittels eines Koeffizienten $\delta$ der Multiplikation (50), der von der Drehgeschwindigkeit des Motors (10) gemäss einer Kartographie (54) abhängt.

**5.** Verfahren nach einem der Ansprüche 1 oder 2, **dadurch gekennzeichnet, dass** der Schritt der Abschätzung des charakteristischen Faktors $N_{ES}$ darin besteht, eine Division durchzuführen zwischen einem Wert, der proportional ist zur Abschätzung des Gehaltes $[HC]_{INES}$ an Kohlenwasserstoffen am Eingang des mit dem Katalysator versehenen Auspufftopfes und dem gemessenen Wert $[HC]_{OUT}$ des Gehaltes an Kohlenwasserstoffen am Ausgang des mit dem Katalysator versehenen Auspufftopfes.

6. Verfahren nach Anspruch 5, **dadurch gekennzeichnet, dass** der zur Abschätzung des Gehaltes $[HC]_{INES}$ an Kohlenwasserstoffen am Eingang des mit dem Katalysator versehenen Auspufftopfes proportionale Wert ausschließlich von der Drehgeschwindigkeit $N_{mot}$ des Motors abhängt.

7. Verfahren nach Anspruch 5, **dadurch gekennzeichnet, dass** der zur Abschätzung des Gehaltes $[HC]_{INES}$ an Kohlenwasserstoffen am Eingang des mit dem Katalysator versehenen Auspufftopfes proportionale Wert abhängt vom Verhältnis zwischen den geschätzten Werten $[HC]_{INES}$ am Eingang des mit dem Katalysator versehenen Auspufftopfes und des Sauerstoffs $[O_2]_{INES}$ und der linearen Geschwindigkeit VVH der Abgase des Motors, die aus den Betriebspunkten des Motors resultieren, die definiert sind durch die Drehgeschwindigkeit $N_{mot}$ des Motors und den Druck $P_{coll}$ im Einlasssammler des Motors.

8. Verfahren nach Anspruch 5, **dadurch gekennzeichnet, dass** der zur Abschätzung des Gehaltes $[HC]_{INES}$ an Kohlenwasserstoffen am Eingang des mit dem Katalysator versehenen Auspufftopfes proportionale Wert erhalten wird durch eine Kartographie (80) des Verhältnisses $VVH.([HC]_{INES})/K.[O_2]_{INES}$ als Funktion der Drehgeschwindigkeit $N_{mot}$ des Motors und des Drucks $P_{coll}$ im Einlasssammler, wobei K ein Proportionalitätsfaktor ist und $[O_2]_{INES}$ der geschätzte Wert des Gehaltes an Sauerstoff am Eingang des mit dem Katalysator versehenen Auspufftopfes ist.

9. Verfahren nach Anspruch 7, **dadurch gekennzeichnet, dass** der geschätzte Wert $[HC]_{INES}$ des Gehaltes an Kohlenwasserstoffen am Eingang des mit dem Katalysator versehenen Auspufftopfes mit dem gemessenen Wert $[HC]_{OUT}$ des Gehaltes an Kohlenwasserstoffen am Ausgang des mit dem Katalysator versehenen Auspufftopfes derart korrigiert wird, dass ein Term $[HC]_{INES} - [HC]_{OUT}$ erhalten wird, der multipliziert (72) wird mit dem Term $VVH/K. [O_2]_{INES}$, wobei
VVH die lineare Geschwindigkeit der Abgase ist,
$[O_2]_{INES}$ der geschätzte Wert des Gehaltes an Sauerstoff am Eingang des mit dem Katalysator versehenen Auspufftopfes ist und
K ein Proportionalitätsfaktor ist.

10. Verfahren nach Anspruch 9, **dadurch gekennzeichnet, dass** der Term $[HC]_{INES}$ sowie der Term $VVH/K. [O_2]_{INES}$ geschätzt werden mittels einer Kartographie (48, 74) als Funktion der Drehgeschwindigkeit $N_{mot}$ des Motors und des Drucks $P_{coll}$ im Einlasssammler.

11. Verfahren nach einem der Ansprüche 3 bis 4, **dadurch gekennzeichnet, dass** der Schritt der Abschätzung des charakteristischen Faktors $N_{ES}$ darin besteht, eine Integration (46) durchzuführen einer Differenz (42) zwischen dem geschätzten Wert $[HC]_{OUTES}$ des Gehaltes an Kohlenwasserstoffen am Ausgang des mit dem Katalysator versehenen Auspufftopfes und dem gemessenen Wert $[HC]_{OUT}$ desselben Gehaltes.

12. Verfahren nach Anspruch 11, **dadurch gekennzeichnet, dass** der geschätzte Wert $[HC]_{OUTES}$ der Kohlenwasserstoffe am Ausgang des mit dem Katalysator versehenen Auspufftopfes erhalten wird durch eine Integration (40) einer Differenz zwischen einem ersten Term $([HC]_{OUTES}-[HC]_{INES}) .VVH$, der für die Verbrennung in dem mit dem Katalysator versehenen Auspufftopf steht und einem zweiten Term $N_{ES}.K. [HC]_{OUTES}. [O_2]_{INES}$, der den Wirkungsgrad des mit dem Katalysator versehenen Auspufftopfes darstellt, wobei
$[HC]_{INES}$ eine Abschätzung des Gehaltes an Kohlenwasserstoffen am Eingang des mit dem Katalysator versehenen Auspufftopfes ist,
VVH die lineare Geschwindigkeit der Abgase ist,
$N_{ES}$ der charakteristische Faktor ist,
K ein Proportionalitätsfaktor ist und
$[O_2]_{INES}$ eine Abschätzung des Gehaltes an Sauerstoff am Eingang des mit dem Katalysator versehenen Auspufftopfes ist.

13. Verfahren nach Anspruch 12, **dadurch gekennzeichnet, dass** der erste Term $([HC]_{OUTES}-[HC]_{INES}.VVH$ des geschätzten Wertes $[HC]_{INES}$ der Kohlenwasserstoffe am Eingang des mit dem Katalysator versehenen Auspufftopfes sowie der Koeffizient VVH der Multiplikation, der die lineare Geschwindigkeit der Abgase wiedergibt, aus Kartographien (48, 58) erhalten werden als Funktion der Drehgeschwindigkeit $N_{mot}$ des Motors und des Drucks $P_{coll}$

im Einlasssammler.

**14.** Verfahren nach Anspruch 12 oder 13, **dadurch gekennzeichnet, dass** der zweite Term $N_{ES}.K.[HC]_{OUTES}$. $[O_2]_{INES}$, der geschätzte Wert $K.[O_2]_{INES}$ des Sauerstoffs am Eingang des mit dem Katalysator versehenen Auspufftopfes aus einer Kartographie (62) erhalten werden als Funktion der Drehgeschwindigkeit $N_{mot}$ des Motors und des Drucks $P_{coll}$ im Einlasssammler.

**15.** Verfahren nach einem der vorhergehenden Ansprüche 1 bis 14, **dadurch gekennzeichnet, dass** die verschiedenen Kartographien durch Polynome ersetzt werden.

**16.** Verfahren nach einem der vorhergehenden Ansprüche, **dadurch gekennzeichnet, dass** der Schritt der Messung des Gehaltes $[HC]_{OUT}$ an Kohlenwasserstoffen am Ausgang des mit dem Katalysator versehenen Auspufftopfes (20) die folgenden Schritte aufweist:

(a$_1$) messen der Spannung $V_{HC}$, die von einem Fühler (22) stammt zur Messung des Vorkommens von Kohlenwasserstoffen,
(a$_2$) umwandeln der gemessenen Spannung $V_{HC}$ in einen Gehalt an Kohlenwasserstoffen [HC] gemäss einer vorgegebenen Umwandlungskurve,
(a$_3$) zeitweises Eichen des Fühlers (22) durch messen der Spannung $V_0$, die von ihm abgegeben wird bei fehlender Zufuhr von Kraftstoff und bei Überschuss an Luft während einer vorbestimmte Zeitdauer, sodass als Folge die vorgegebene Umwandlungskurve geändert wird.

**17.** Verfahren nach Anspruch 16, **dadurch gekennzeichnet, dass** der Schritt (a$_3$) die folgenden Unterschritte aufweist:

(a$_{31}$) feststellen des Fehlens der Zufuhr an Kraftstoff zum Motor,
(a$_{32}$) öffnen des Lufteinlasses für den Motor,
(a$_{33}$) wiederholtes messen der Spannung $V_0$ des Fühlers (22),
(a$_{34}$) berechnen des Mittelwertes und der Standardabweichung der gemessenen Werte der Spannung $V_0$,
(a$_{35}$) speichern als Wert $V_0$ der Spannung des Mittelwertes, der einer vorbestimmten Standardabweichung entspricht und
(a$_{36}$) entsprechendes ändern der Umwandlungskurve.

**18.** Vorrichtung zur Durchführung des Verfahrens nach einem der vorhergehenden Ansprüche, mit:

einem Fühler (24) für die Drehgeschwindigkeit ($N_{mot}$) des Motors,
einem Fühler (22) für den Druck ($P_{coll}$) im Einlasssammler für die Luft des Motors oder in einem Mengenmesser für die Luft,
einem Fühler (22,32) für die Abschätzung des Gehaltes an Kohlenwasserstoffen $[HC]_{OUT}$ am Ausgang des mit dem Katalysator versehenen Auspufftopfes (20),
einem Rechner (30) um den Gehalt $[HC]_{INES}$ an Kohlenwasserstoffen am Eingang des mit dem Katalysator versehenen Auspufftopfes abzuschätzen und um einen charakteristischen Faktor $N_{ES}$ für den Zustand der katalytischen Oberfläche in dem mit Katalysator versehenen Auspufftopf (20) zu erhalten als Funktion der von den Fühlern (22, 24, 26 ) stammenden Werte, **dadurch gekennzeichnet, dass** der Rechner (30) ausgehend von einem mathematischen Modell den Wert des Gehaltes $[HC]_{INES}$ am Eingang des mit dem Katalysator versehenen Auspufftopfes und den charakteristischen Faktor $N_{ES}$ für den Zustand der katalytischen Oberfläche im Auspufftopf (20) als Funktion der von den Fühlern (22, 24, 26) zu jedem Zeitpunkt des Betriebes des Motors gelieferten Werte abschätzt und
einem Vergleicher (34), der den geschätzten Term $N_{ES}$ mit einem Schwellwert S vergleicht und ein Alarmsignal AL erzeugt, wenn der geschätzte Wert $N_{ES}$ den Schwellwert S erreicht.

**Claims**

**1.** A method of monitoring the operation and ageing of a catalytic converter (20) for a lean-burn internal combustion engine (10) comprising a step of measuring the content $[HC]_{OUT}$ of hydrocarbons at the outlet of the catalytic converter (20) and a step in estimating the content $[HC]_{INES}$ of hydrocarbons at the intake of the catalytic converter, **characterised in that**:

- the value of the content of hydrocarbons at the intake of the catalytic converter $[HC]_{INES}$ is estimated as a function of a mathematical model of the engine which takes account of the operating characteristics of the engine at each moment, and that a characteristic factor $N_{ES}$ of the catalytic surface state of the catalytic converter is estimated as a function of the estimated value $[HC]_{INES}$ and the measured value $[HC]_{OUT}$ of the content of hydrocarbons at the outlet of the catalytic converter.

2. A method according to claim 1 **characterised in that** it further comprises the following steps:

   - comparing the estimated characteristic factor $N_{ES}$ to a threshold value S, and
   - generating an alarm signal AL when the estimated characteristic factor $N_{ES}$ attains said threshold value S.

3. A method according to claim 1 or claim 2 **characterised in that** the operation of estimating the characteristic factor $N_{ES}$ is effected by iteration by first estimating the content of hydrocarbons at the outlet of the catalytic converter $[HC]_{OUTES}$ as a function of the estimated content of hydrocarbons at the intake of the catalytic converter $[HC]_{INES}$ and the characteristic factor $N_{ES}$ at the preceding iteration step and then integrating the difference between the estimate of the content $[HC]_{OUTES}$ of hydrocarbon at the outlet of the catalytic converter and measurement $[HC]_{OUT}$ of said same content resulting in a modelling error.

4. A method according to claim 3 **characterised in that** the estimated value $[HC]_{INES}$ of the content of hydrocarbons at the intake of the catalytic converter takes account of the combustion instability of the engine by a multiplication coefficient $\delta$ (50) which depends on the speed of rotation of the engine (10) in accordance with a mapping (54).

5. A method according to one of claims 1 and 2 **characterised in that** the step of estimating the characteristic factor $N_{ES}$ consists of effecting a division between a value proportional to the estimate of the content of hydrocarbons at the intake of the catalytic converter $[HC]_{INES}$ and the measured value $[HC]_{OUT}$ of the content of hydrocarbon at the outlet of the catalytic converter.

6. A method according to claim 5 **characterised in that** the value proportional to the estimate of the content of hydrocarbons at the intake of the catalytic converter $[HC]_{INES}$ depends solely on the speed of rotation of the engine $N_{mot}$.

7. A method according to claim 5 **characterised in that** the value proportional to the estimate of the content of hydrocarbons at the intake of the catalytic converter $[HC]_{INES}$ depends on the ratio between the estimated values at the intake of the catalytic converter of the hydrocarbons $[HC]_{INES}$ and the oxygen $[O_2]_{INES}$ and the linear speed VVH of the exhaust gases of the engine which result from the operating points of the engine which are defined by the speed of rotation of the engine $N_{mot}$ and the pressure $P_{coll}$ of the induction manifold of the engine.

8. A method according to claim 5 **characterised in that** value proportional to the estimate of the content of hydrocarbons at the intake of the catalytic converter $[HC]_{INES}$ is obtained by a mapping (80) of the ratio VVH. $([HC]_{INES})$ /k. $[O_2]_{INES}$ in dependence on the speed of rotation of the engine $N_{mot}$ and the manifold pressure $P_{coll}$, K being a proportionality factor,

   - $[O_2]_{INES}$ being the estimated value of the oxygen content at the intake of the catalytic converter.

9. A method according to claim 7 **characterised in that** the estimated value $[HC]_{INES}$ of the content of hydrocarbons at the intake of the catalytic converter is corrected by the measured value $[HC]_{OUT}$ of the content of hydrocarbons at the outlet of the catalytic converter in such a way as to obtain a term $[HC]_{INES} - [HC]_{OUT}$ which is multiplied (72) by the term VVH/k.$[O]_{INES}$,

   - VVH being the linear speed of the exhaust gases,
   - $[O_2]_{INES}$ being the estimated value of the oxygen content at the intake of the catalytic converter, and
   - k being a proportionality factor.

10. A method according to claim 9 **characterised in that** the term $[HC]_{INES}$ and the term VVH/K.$[O_2]_{INES}$ are each estimated by a mapping (48, 74) in dependence on the speed of rotation of the engine $N_{mot}$ and the manifold pressure $P_{coll}$.

11. A method according to one of claims 3 to 4 **characterised in that** the step of estimating the characteristic factor

$N_{ES}$ consists of effecting integration (46) of a difference (42) between the estimated value $[HC]_{OUTES}$ of the content of hydrocarbons at the outlet of the catalytic converter and the measured value $[HC]_{OUT}$ of said same content.

**12.** A method according to claim 11 **characterised in that** the estimated value $[HC]_{OUTES}$ of the hydrocarbons at the outlet of the catalytic converter is obtained by integration (40) of a difference between a first term $([HC]_{OUTES}-[HC]_{INES})$. VVH representative of combustion implemented in the catalytic converter and a second term $N_{ES}.K.[HC]_{OUTES}.[O_2]_{INES}$ representative of the effectiveness of the catalytic converter, wherein:

$[HC]_{INES}$ is an estimate of the content of hydrocarbons at the intake of the catalytic converter,
VVH is the linear speed of the exhaust gases,
NES is the characteristic factor,
K is a proportionality factor, and
$[O_2]_{Nes}$ is an estimate of the oxygen content at the intake of the catalytic converter.

**13.** A method according to claim 12 **characterised in that** in the first term $([HC]_{OUTES}-[HC]_{INES}).VVH$ the estimated value $[HC]_{INES}$ of the hydrocarbons at the intake of the catalytic converter and the multiplication coefficient VVH corresponding to the linear speed of the exhaust gases are respectively obtained by mappings (48, 58) as a function of the speed of rotation of the engine $N_{mot}$ and the pressure of the induction manifold $P_{coll}$.

**14.** A method according to claim 12 or claim 13 **characterised in that** in the second term $N_{ES}.K.[HC]_{OUTES}.[O_2]_{INES}$ the measured value $K.[O_2]_{INES}$ of the oxygen at the intake of the catalytic converter is obtained by a mapping (62) as a function of the speed of rotation of the engine $N_{mot}$ and the pressure of the induction manifold $P_{coll}$.

**15.** A method according to any one of claims 1 to 14 **characterised in that** the different mappings are replaced by polynomial calculations.

**16.** A method according to any one of the preceding claims **characterised in that** the step of measuring the content $[HC]_{OUT}$ of hydrocarbons at the outlet of the catalytic converter (20) comprises the following steps consisting of:

($a_1$) measuring the voltage $V_{HC}$ provided by a sensor (22) capable of detecting the presence of hydrocarbons,
($a_2$) converting the measured voltage $V_{HC}$ into a content of hydrocarbons [HC] in accordance with a given conversion curve, and
($a_3$) calibrating the sensor (22) from time to time by measuring the voltage $V_0$ which it provides in the absence of a feed of fuel and excess of air for a given time in such a way as to consequentially modify the given conversion curve.

**17.** A method according to claim 16 **characterised in that** step ($a_3$) comprises the following steps consisting of:

($a_{31}$) detecting the absence of a feed of fuel to the engine,
($a_{32}$) opening the air intake of the engine,
($a_{33}$) repetitively measuring the voltage $V_0$ of the sensor (22),
($a_{34}$) calculating the mean and the typical difference of the measured values $V_0$,
($a_{35}$) retaining as the value of the voltage $V_0$ the mean value corresponding to a given typical difference, and
($a_{36}$) consequentially modifying the conversion curve.

**18.** A system for carrying out the method according to any one of the preceding claims, which comprises:

- a sensor (24) for the speed of rotation of the engine ($N_{mot}$),
- a sensor (20) for the pressure $P_{coll}$ of the air induction manifold of the engine or an air flow rate measuring device,
- a sensor (22, 32) for the content of hydrocarbons $[HC]_{OUT}$ at the outlet of the catalytic converter (20), and
- a computer (30) for estimating the content of hydrocarbons $[HC]_{INES}$ at the intake of the catalytic converter and for a characteristic factor $N_{ES}$ of the catalytic surface state of the catalytic converter (20) as a function of the values provided by the three sensors (22, 24, 26), **characterised in that**
- the computer (30) estimates from a mathematical model the value of the content of $[HC]_{INES}$ at the intake of the catalytic converter and for a characteristic factor $N_{ES}$ of the surface state of the catalytic converter (20) as a function of the values provided by the sensors (22, 24, 26) at each moment of operation of the engine, and
- a comparator (34) compares the estimated term $N_{ES}$ to a threshold value S and provides an alarm signal AL when the estimated term $N_{ES}$ attains the threshold value S.

# FIG_1

14

16    12    10    20

P

26    24    $N_{mot}$    18    22

$P_{coll}$    $V_{HC}$

28

$AL$

# FIG_2

[HC]

$V_{HC}$

# FIG_3

32    $[HC]_{out}$    30    34

$V_{HC}$

$N_{mot}$    ESTIMATEUR    $N_{ES}$    $AL$

$P_{coll}$

## FIG_4

## FIG_5

# FIG_6

# FIG_7

## FIG_8

$N_{ES}$ → 90 → AL
S →

## FIG_9

DEBUT — 100

↓ OUI

COUPURE INJECTION — 102 →NON

↓ OUI

OUVERTURE PAPILLON 16 — 104

↓ OUI

CALCUL ECART-TYPE/MOYENNE — 106

↓ OUI

FIN ZONE MESURE — 108 →NON

↓ OUI

VALIDATION ETALONNAGE — 110 →NON

↓ OUI

DECALAGE=MOYENNE — 112

FIN — 114